# EUROPEAN PATENT APPLICATION

(11) **EP 4 633 159 A1**
(43) Date of publication of application: **15.10.2025**
(21) Application number: 24169180.7
(22) Date of filing: 09.04.2024
(51) Int. Cl.: H04N 19/17, H04N 19/20, H04N 21/218, H04N 21/81

(54) **IMAGE DATA SIGNAL**

(71) Applicant: Koninklijke Philips N.V., 5656 AG Eindhoven (NL)
(72) Inventor: VAN GEEST, Bartholomeus Wilhelmus Damianus, 5656 AG Eindhoven (NL); VAREKAMP, Christiaan, 5656 AG Eindhoven (NL); KROON, Bart, 5656 AG Eindhoven (NL)
(74) Representative: Philips Intellectual Property & Standards

(57) **Abstract**

An apparatus comprises a receiver (201) receiving images of a scene from different view poses of the scene. A segmenter (203) determines object image segments in the images which represent an object. A selector (205) selects a subset of object image segments and a generator (207) generates the image data signal to comprise the subset of object image segments. An occlusion determiner (211) determines an occlusion measure for the object image segments which indicates a degree of occlusion of an object represented by the object image segment and the selector (205) selects object image segments for the subset dependent on the occlusion measures for the set of object image segments. A rendering apparatus may receive the image data signal and generate views of the scene from the image data signal.

## Description

### FIELD OF THE INVENTION

The invention relates to an image data signal and the generation and/or processing thereof, and in particular, but not exclusively, to generation and/ or processing of an image data signal comprising image data for multiple viewpoints for the same scene.

### BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and "look around" in the scene being presented.

Such a feature can specifically allow an extended Reality (XR)/Virtual Reality (VR)/Augmented Reality (AR) experience to be provided to a user. This may allow the user to e.g. (relatively) freely move about in a virtual environment and dynamically change his position and where he is looking. Typically, such virtual reality applications are based on a three-dimensional model of the scene with the model being dynamically evaluated to provide the specific requested view. This approach is well known from e.g. game applications, such as in the category of first person shooters, for computers and consoles.

It is also desirable, in particular for extended reality applications, that the image being presented is a three-dimensional image. Indeed, in order to optimize immersion of the viewer, it is typically preferred for the user to experience the presented scene as a three-dimensional scene. Indeed, a virtual reality experience should preferably allow a user to select his/her own position, camera viewpoint, and moment in time relative to a virtual world.

A large number of virtual reality applications are inherently limited in that they are based on the presence of a predetermined model of the scene, and typically on an artificial model of a virtual world, such as for example for gaming applications.

However, it is desirable to be able to provide extended reality experiences that allow the user to experience a real world capture. Such applications include e.g. applications that allow a user to freely change position and view direction in a representation of a real world scene. However, the requirements in order to support such freedom are difficult to meet in many circumstances, such as in particular where the real world scene is also a dynamically changing, and specifically a real time scene. For example, providing sufficient data to allow a user to freely move and change view direction for a scene which corresponds to a live, real time broadcast of e.g. a sports event, is typically not practical or feasible. Accordingly, applications and experiences where the user has restricted freedom in movement and/or view directions are receiving increasing interest. For example, a sports event may be broadcast where a user may rotate his head freely within a 180° range but only move his head by a relatively small amount. Such limited movement may reduce the requirements for the data that needs to be provided substantially.

A critical issue for most applications allowing local rendering of images for different viewpoints of a scene is that of how to represent such a scene, and in particular how to effectively generate, distribute, and process data representing a real world scene such that an end user device is provided with sufficient data to locally generate view images of the real world, and often real time, scene. It is typically not feasible or practical to generate a model of a real world scene and in particular not when the service is supporting a dynamically changing scene such as a real time event.

In many systems, the scene may be represented by images that have been captured by suitable capture devices, such as cameras. For example, cameras may be arranged in a given configuration, such as in a row, with each camera capturing the scene from a given capture pose. The images from different positions may provide a representation of different parts of the scene. For example, a background object may be occluded by a foreground object from some capture positions but not from other capture positions, and thus information related to the background object may be present in some capture images but not in others. A multi-view image of a scene may be considered a 3D image of the scene.

In many practical systems, captured images may be supplemented by depth information, such as a z-value or a disparity value being provided for each pixel in an associated depth map. Such an image + depth representation may be considered a 3D image. Using image + depth information provided for a range of viewpoints may have many applications and for many scenes provide an advantageous representation of the scene allowing local generation of view images. The image+depth information may be transmitted to a rendering device that may dynamically generate view images for the current view position and view direction of a user.

However, whereas an image representation of a scene comprising a plurality of images from different capture positions (and in some cases additionally with depth data) may provide desirable performance and operation in many embodiments, it tends to also require high data rates for the communication of the image representation to the rendering device. Indeed, directly distributing all captured view images is often not feasible because the pixel rate, and thus the data rate, is much too high. Directly transmitting all images is also wasteful as it includes transmitting a large amount of redundant data. For example, the front of a foreground object may be visible from a plurality of capture positions, and thus visual information for the object will be included in a plurality of the capture images to be transmitted.

However, the issue of how to reduce the required data rate is a complex issue that is challenging to address. It has been proposed to identify and omit some redundant data and then generate an image data signal without this redundant data. However, whereas this may reduce the data rate, it is a difficult challenge how to specifically achieve this such that image quality, data rate, complexity, resource requirements etc. are optimized as far as possible.

Hence, an improved approach would be advantageous. In particular, an approach for generating and/ or processing an image data signal that allows improved operation, increased flexibility, an improved extended reality experience, reduced data rates, increased efficiency, facilitated distribution, reduced complexity, facilitated implementation, increased image quality, improved data rate versus image quality trade-off and/or processing demand, and/or improved performance and/or operation would be advantageous.

### SUMMARY OF THE INVENTION

Accordingly, the Invention seeks to preferably mitigate, alleviate or eliminate one or more of the above mentioned disadvantages singly or in any combination.

According to a first aspect of the invention, there is provided an apparatus for generating an image data signal for/representing a scene, the apparatus comprising: a receiver arranged to receive a plurality of images of the scene, at least some images of the plurality of images being for different view poses of the scene; a segmenter arranged to determine a set of object image segments in the plurality of images, each object image segment of the set of object image segments (being an image segment estimated/determined to be) representing an object of the scene; a selector arranged to select a subset of object image segments from the set of object image segments; a generator arranged to generate the image data signal to comprise the subset of object image segments; wherein the apparatus further comprises: an occlusion determiner arranged to determine an occlusion measure for object image segments of the set of object image segments, the occlusion measure for an object image segment indicating a degree of occlusion of an object represented by the object image segment (occlusion from the viewpoint of the image segment); and wherein the selector is arranged to select object image segments for the subset dependent on the occlusion measures for the set of object image segments.

The invention may provide an improved representation of a scene. In many embodiments, a more efficient representation of a scene can be provided, e.g. allowing a given rendering quality to be achieved by a reduced data rate.

The approach may in many embodiments provide an improved image data signal with a representation of a scene suitable for a flexible, efficient, and high performance local generation of view images for different view positions/poses. In many embodiments, it may allow an improved perceived image quality and/or a reduced data rate.

The approach may allow a particularly efficient and/or low complexity generation of an image data signal in many embodiments and scenarios.

The generator may be arranged to exclude object image segments that are not included in the subset from the image data signal. The occlusion measure for an object image segment may indicate a degree of occlusion of an object represented by the object image segment from the viewpoint of the object image segment. The occlusion measure for an object image segment may indicate a degree of occlusion for the object image segment of the object represented by the object image segment (from the viewpoint of the object image segment).

The images may be 3D images comprising depth information, such as specifically a 2D image or texture map with associated depth image/map. The plurality of images of the scene may be multi-view images (and specifically may be a multi-view image with depth (MVD) representation of the scene.

The image data signal may be a video data signal. The plurality of images may be images from the same frame time or may extend over a plurality of frame times of a video input signal.

According to an optional feature of the invention, the selector is arranged to bias selection of object image segments towards object image segments for which the occlusion measure is indicative of reduced occlusion.

This may be particularly advantageous in many scenarios and embodiments. It may allow an improved image data signal to be generated which may provide an improved trade-off between data rate of the image data signal, rendering quality and/or processing complexity.

According to an optional feature of the invention, the selector is arranged to select an object image segment for the subset if the occlusion measure meets a criterion, and to exclude the object image segment if the occlusion measure does not meet the criterion, the criterion being met for an occlusion measure being indicative of a degree of occlusion being less than a threshold.

This may be particularly advantageous in many scenarios and embodiments. It may allow an improved image data signal to be generated which may provide an improved trade-off between data rate of the image data signal, rendering quality and/or processing complexity. The threshold may in some embodiments be a fixed threshold or may in many embodiments be a variable threshold dependent on other parameters, such as being dependent on an occlusion measure of one or more other object image segments.

According to an optional feature of the invention, the selector is arranged to select an object image segment having an occlusion measure indicating no occlusion over an object image segment having an occlusion measure indicating occlusion.

This may be particularly advantageous in many scenarios and embodiments.

In some embodiments, the selector is arranged to select an object image segment having an occlusion measure indicating no occlusion over an object image segment having an occlusion measure indicating occlusion exceeding a given threshold (which may be a variable threshold).

According to an optional feature of the invention, the selector is arranged to select a plurality of object image segments for at least one object with the selection being dependent on view poses for the images of the object image segments.

This may allow an improved image data signal to be generated which may provide an improved trade-off between a data rate of the image data signal, a rendering quality and/or a processing complexity/resource usage. The selector may be arranged to select the object image segment to provide an improved representation of the object from different directions.

According to an optional feature of the invention, the selector is arranged to select at least one object image segment for each identified object of the scene.

This may be particularly advantageous in many scenarios and embodiments. It may allow a more accurate and complete rendering of the scene from the image data signal.

According to an optional feature of the invention, the selector is arranged to exclude at least one object image segment of the set of object image segments from the subset of object image segments for an object for which the set of object image segments comprise a plurality of object image segments having occlusion measures indicative of a partial occlusion.

This may be particularly advantageous in many scenarios and embodiments. It may allow an improved image data signal to be generated which may provide an improved trade-off between data rate of the image data signal, rendering quality and/or processing complexity. It may in particular often allow a reduced data rate without substantially degrading the perceived rendering quality of images rendered from the image data signal.

According to an optional feature of the invention, the generator is arranged to include a plurality of object image segments of the subset of object image segments in an image atlas, and to encode the image atlas using an image encoding operation.

This may be particularly advantageous in many scenarios and embodiments. It may allow an improved image data signal to be generated which may provide an improved trade-off between data rate of the image data signal, rendering quality and/or processing complexity/resource. The approach may allow very efficient image encoding of the image atlas thereby providing a reduced data rate.

According to an optional feature of the invention, the image data signal is a video signal comprising image data for a plurality of temporal frames and the plurality of images are for a same temporal frame of the temporal frames.

The approach may provide a highly advantageous and efficient approach for generating a video signal representing a scene. The image data signal may be a video data signal.

In some embodiments, the image data signal is a video signal comprising image data for a plurality of temporal frames and at least some of the plurality of images are for different temporal frames of the temporal frames.

According to an optional feature of the invention, the selector is arranged to maintain the same selection over a plurality of the temporal frames.

This may often allow a more efficient encoding and image data signal and/or may provide improved rendering.

This may be particularly advantageous in many scenarios and embodiments. It may allow an improved image data signal to be generated which may provide an improved trade-off between data rate of the image data signal, rendering quality and/or processing complexity.

According to an optional feature of the invention, the occlusion determiner is arranged to determine an occlusion measure for a first object image segment in dependence on at least one of: an object detection reliability measure for an object represented by the first object image segment; a size property for the first object image segment; a shape property for the first object image segment; a proximity of an object represented by the first object image segment to another object of the scene; and a similarity measure between the first object image segment and another object image segment (of the other view images or of another temporal frame).

This may be particularly advantageous in many scenarios and embodiments.

According to an optional feature of the invention, the generator is further arranged to generate a background image for the scene and to include the background image in the image data signal.

This may be particularly advantageous in many scenarios and embodiments and may provide a highly efficient representation of a scene. It may typically reduce complexity and allow improved rendering quality.

According to an optional feature of the invention, the generator is arranged to include an indication of the occlusion measure for at least one object image segment in the image data signal.

This may allow improved rendering of view images of the scene from the image data signal in many embodiments and scenarios.

According to an optional feature of the invention, the generator is arranged to include an object identity for at least some object image segments in the image data signal, an object identity for a first object image segment being indicative of an object represented by the first object image segment.

This may in many embodiments and scenarios allow improved rendering of view images of the scene from the image data signal.

According to another aspect of the invention, there is provided a method of generating an image data signal for a scene, the method comprising: receiving a plurality of images of the scene, at least some images of the plurality of images being for different view poses of the scene; determining a set of object image segments in the plurality of images, each object image segment of the set of object image segments representing an object of the scene; selecting a subset of object image segments from the set of object image segments; generating the image data signal to comprise the subset of object image segments; wherein the method further comprises: determining an occlusion measure for object image segments of the set of object image segments, the occlusion measure for an object image segment indicating a degree of occlusion of an object represented by the object image segment; and wherein the selecting includes selecting object image segments for the subset dependent on the occlusion measures for the set of object image segments.

According to another aspect of the invention, there is provided an apparatus for generating an image, the apparatus comprising: a receiver arranged to receive an image data signal comprising image data describing a scene, the image data comprising: a set of object image segments, each object image segment providing image data for of a scene object of the scene from a view pose, at least some object image segments providing image data from /for different view poses; and the image data signal further comprising: at least one occlusion measure for at least one object image segment of the set of object image segments, the occlusion measure being indicative of a degree of occlusion of an object represented by the at least one object image segment; and a renderer arranged to generate an image representing a view of the scene from a view pose from the received object image segments, the generation of the image being dependent on the at least one occlusion measure.

According to another aspect of the invention, there is provided a method of generating an image, the method comprising: receiving an image data signal comprising image data describing a scene, the image data comprising: a set of object image segments, each object image segment providing image data for of a scene object of the scene from a view pose, at least some object image segments providing image data from /for different view poses; and the image data signal further comprising: at least one occlusion measure for at least one object image segment of the set of object image segments, the occlusion measure being indicative of a degree of occlusion of an object represented by the at least one object image segment; and generating an image representing a view of the scene from a view pose from the received object image segments, the generation of the image being dependent on the at least one occlusion measure.

According to another aspect of the invention, there is provided an image data signal comprising image data describing a scene, the image data comprising: a set of object image segments, each object image segment of the sets of object image segments providing image data for a scene object of the scene from a view pose, at least some object image segments providing image data from different view poses; and the image data signal further comprising: at least one occlusion measure for at least one object image segment of the set of object image segments, the occlusion measure being indicative of a degree of occlusion of an object represented by the at least one object image segment.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of an arrangement for providing a virtual reality experience;
FIG. 2 illustrates an example of elements of an image data signal transmitter in accordance with some embodiments of the invention;
FIG. 3 illustrates an example of elements of an image data signal receiver in accordance with some embodiments of the invention;
FIG. 4 illustrates an example of multiview images that may be processed by the image data signal transmitter of FIG. 2;
FIG. 5 illustrates an example of multiview images that may be processed by the image data signal transmitter of FIG. 2; and
FIG. 6 illustrates some elements of a possible arrangement of a processor for implementing elements of an apparatus in accordance with some embodiments of the invention.

### DETAILED DESCRIPTION OF SOME EMBODIMENTS OF THE INVENTION

Visual capture and representation of a scene by image data has become increasingly important and ubiquitous in the last decade or more, and in particular image data representing three dimensional properties of a scene are frequently used to provide additional services.

For example, virtual experiences allowing a user to move around in a virtual world are becoming increasingly popular and services are being developed to satisfy such a demand. However, provision of efficient virtual reality services is very challenging, in particular if the experience is to be based on a capture of a real-world environment rather than on a fully virtually generated artificial world.

A particular example of a virtual reality experience is immersive video where a real world activity/scene may be captured as video that includes three dimensional information describing the scene thereby allowing a renderer to vary the viewpoint thereby allowing a user to view the dynamic scene/video from different view positions/orientations.

In many extended reality applications, a viewer pose input is determined reflecting the pose of a virtual viewer in the scene. The apparatus/ system/ application then generates one or more images corresponding to the views and viewports of the scene for a viewer corresponding to the viewer pose.

Typically, the extended reality application generates a three-dimensional output in the form of separate view ports/images for the left and the right eyes. These may then be presented to the user by suitable means, such as typically individual left and right eye displays of a VR headset. In other embodiments, the image may e.g. be presented on an autostereoscopic display (in which case a larger number of view images may be generated for the viewer pose), or indeed in some embodiments only a single two-dimensional image may be generated (e.g. using a conventional two-dimensional display).

The viewer pose input may be determined in different ways in different applications. In many embodiments, the physical movement of a user may be tracked directly. For example, a camera surveying a user area may detect and track the user's head (or even eyes). In many embodiments, the user may wear a VR headset which can be tracked by external and/or internal means. For example, the headset may comprise accelerometers and gyroscopes providing information on the movement and rotation of the headset and thus the head. In some examples, the VR headset may transmit signals or comprise (e.g. visual) identifiers that enable an external sensor to determine the movement of the VR headset.

In some systems, the viewer pose may be provided by manual means, e.g. by the user manually controlling a joystick or similar manual input. For example, the user may manually move the virtual viewer around in the scene by controlling a first analog joystick with one hand and manually controlling the direction in which the virtual viewer is looking by manually moving a second analog joystick with the other hand.

In some applications a combination of manual and automated approaches may be used to generate the input viewer pose. For example, a headset may track the orientation of the head and the movement/ position of the viewer in the scene may be controlled by the user using a joystick.

The generation of images is based on a suitable representation of the virtual world/ environment/ scene. In some applications, a full three-dimensional model may be provided for the scene and the views of the scene from a specific viewer pose can be determined by evaluating this model. In other systems, the scene may be represented by image data corresponding to views captured from different capture poses, and specifically may be represented by a plurality of source images with associated depth, where each image represents the scene from a different viewpoint. In such approaches, view images for other poses than the capture pose(s) may be generated by three dimensional image processing, such as specifically using view shifting algorithms. In systems where the scene is described/ referenced by view data stored for discrete viewpoints/ positions/ poses, these may also be referred to as anchor viewpoints/ positions/ poses. Typically, when a real world environment has been captured by capturing images from different points/ positions/ poses, these capture points/ positions/ poses are also the anchor points/ positions/ poses.

A typical VR application accordingly provides (at least) images corresponding to viewports for the scene for the current viewer pose with the images being dynamically updated to reflect changes in the viewer pose and with the images being generated based on data representing the virtual scene/ environment/ world.

In the field, the terms placement and pose are used as a common term for position and/or direction/ orientation. The combination of the position and direction/ orientation of e.g. an object, a camera, a head, or a view may be referred to as a pose or placement. Thus, a placement or pose indication may comprise six values/ components/ degrees of freedom with each value/ component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). A pose may be a position and/or orientation.

Many VR applications are based on a pose having the maximum degrees of freedom, i.e. three degrees of freedom of each of the position and the orientation resulting in a total of six degrees of freedom. A pose may thus be represented by a set or vector of six values representing the six degrees of freedom and thus a pose vector may provide a three-dimensional position and/or a three-dimensional direction indication. However, it will be appreciated that in other embodiments, the pose may be represented by fewer values.

A pose may be at least one of an orientation and a position. A pose value may be indicative of at least one of an orientation value and a position value. A pose may be a position and/or orientation.

A system or entity based on providing the maximum degree of freedom for the viewer is typically referred to as having 6 Degrees of Freedom (6DoF). Many systems and entities provide only an orientation or position and these are typically known as having 3 Degrees of Freedom (3DoF).

In some systems, the VR application may be provided locally to a viewer by e.g. a stand alone device that receives scene data (independent of the specific viewer pose for a local viewer) from a remote device/ server and then locally generates view images for the specific current views of the local viewer. Thus, in many applications, especially for broadcast services, a source may transmit scene data in the form of an image (including video) representation of the scene which is independent of the viewer pose. For example, an image representation comprising a plurality of captured view images and associated depth maps may be received. The individual clients may then locally synthesize view images corresponding to the current viewer pose.

A particular application which is attracting particular interest is where a limited amount of movement is supported such that the presented views are updated to follow small movements and rotations corresponding to a substantially static viewer making only small head movements and rotations of the head. For example, a viewer sitting down can turn his head and move it slightly with the presented views/ images being adapted to follow these pose changes. Such an approach may provide a highly and immersive e.g. video experience. For example, a viewer watching a sports event may feel that he is present at a particular spot in the arena.

Such limited freedom applications have the advantage of providing an improved experience while not requiring an accurate representation of a scene from many different positions thereby substantially reducing the capture requirements. Similarly, the amount of data that needs to be provided to a renderer can be reduced substantially. Indeed, in many scenarios, only image and typically depth data for a single viewpoint need to be provided with the local renderer being able to generate the desired views from this. In order to support head rotations, it is typically desired that a large area of the view from the viewpoint is represented by the provided data, and preferably the whole surface of a view sphere centered on the viewpoint is covered by the provided image and depth data.

The approach may specifically be highly suitable for applications where the data needs to be communicated from a source to a destination over a bandlimited communication channel, such as for example for a broadcast or client server application.

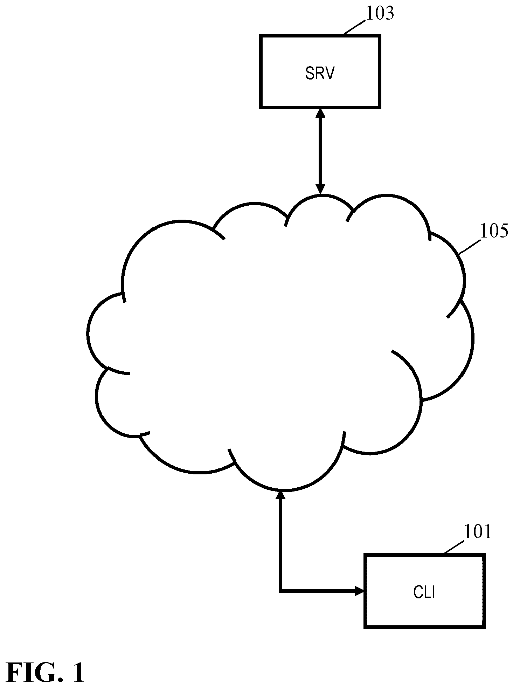

FIG. 1 illustrates such an example of a VR/immersive video system in which a remote VR/immersive video client device 101 liaises with a VR/immersive video server 103 e.g. via a network 105, such as the Internet. The server 103 may be arranged to simultaneously support a potentially large number of client devices 101.

The VR/immersive video server 103 may for example support a broadcast experience by transmitting image data and depth for a plurality of viewpoints with the client devices then being arranged to process this information to locally synthesize view images corresponding to the current pose.

In order to provide an efficient distribution, it is desirable for the data rate to be kept as low as possible for a given image quality, and thus may specifically include seeking to reduce the amount of redundant data which is generated.

A particular approach that has been proposed, in particular for efficient transmission and playback of immersive video, is for multiview images/video to be captured and with the captured data then being pruned by removing (at least partially) redundant image regions. The remaining image regions are known as patches and these are packed into one or more compact multi-component frames/images, called atlases. These atlases are then subsequently encoded as one or more two dimensional video bitstreams plus metadata that enables the projection of atlas samples/patches to scene points, and thus to appropriate image positions in an image representing the view from a given viewpoint.

A key critical challenge for such approaches is how to select which image data to include and which image data to exclude in the output image data. It is desired to prune as much data as possible, yet to provide as much information as possible in order to allow rendering of images of high quality from a range of viewpoints.

An advantageous approach of selecting image data from captured multiview data for generating an image data has been described in EP3932081B1. This approach is based on comparison of the image data of different views following view translation between the viewpoints. However, whereas the approach is highly advantageous in many scenarios, it is not ideal in all cases and in particular may in some cases not provide the optimum selection of image data in order to provide an optimal trade-off between data rate/size and image quality/scene information.

In the following an approach for generating and processing an image data signal will be described. The approach utilizes an approach of selecting image data based on image segmentation and occlusion considerations which in many cases and scenarios provide an improved performance and/or implementation.

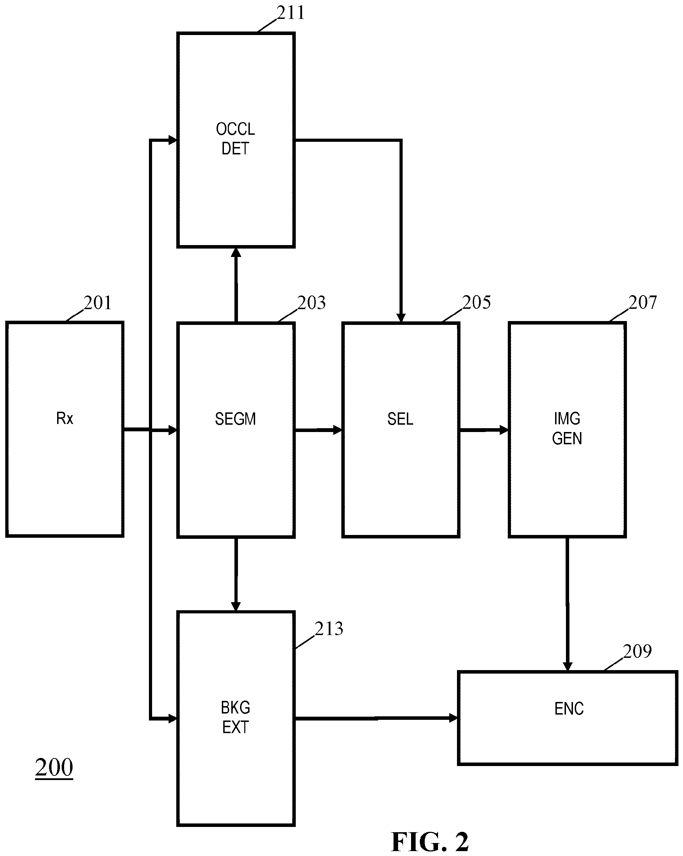

FIG. 2 illustrates an example of an apparatus for generating an image data signal which provides a representation of the scene and includes image data for the scene from different viewpoints/poses (anchor poses). The apparatus will also be referred to as an image data signal transmitter 200. The image data signal transmitter 200 may for example be comprised in the VR/immersive video server 103 of FIG. 1.

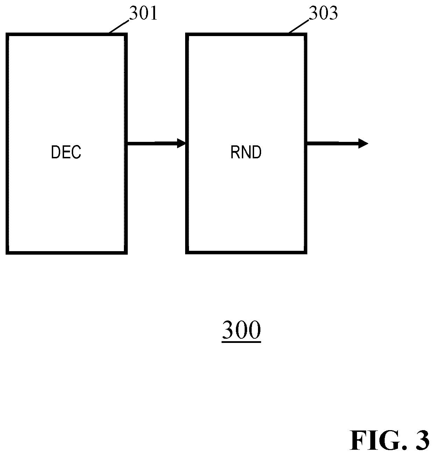

FIG. 3 illustrates an example of an apparatus for generating an image and in particular for rendering view images based on a received image data signal that includes a representation of the scene including image data for the scene from different viewpoints/poses (anchor poses). The apparatus may specifically receive the data signal generated by the apparatus of FIG. 2 and may proceed to process this in order to render images for specific view poses. The apparatus of FIG. 3 will also be referred to as an image data signal receiver 300. The image data signal receiver 300 may for example be comprised in the client device 101 of FIG. 1.

The image data signal transmitter 200 comprises an image source receiver 201 which is arranged to receive a plurality of source images of the scene. The source images may represent views of the scene from different capture poses. For example, the source images may comprise images from a row of equidistant capture poses.

In many embodiments, the source images may be 3D images comprising 2D images with associated depth information. The 2D images may specifically be view images for viewports of the scene from the corresponding capture pose, and the 2D image may be accompanied by a depth image or map comprising depth values for each of the pixels of the 2D image. The 2D image may be a texture map. The source images may be multi-view images.

The depth values may for example be disparity values or distance values, e.g. indicated by a z-coordinate. In some embodiments, a source image may be a 3D image in the form of a texture map with an associated 3D mesh. In some embodiments, such texture maps and mesh representations may be converted into image plus depth representations by the image source receiver before further processing by the image data signal transmitter 200.

The image source receiver 201 accordingly receives a plurality of source images that characterize and represent the scene from different poses. Such a set of source images will allow view images to be generated for other poses using algorithms such as view shifting as will be known to the skilled person. Accordingly, the image data signal transmitter 200 is arranged to generate an image data signal that comprises image data for the source images and transmit this data to a remote device for local rendering. However, directly transmitting all the source images will require an unfeasibly high data rate and will comprise a large amount of redundant information.

The image data signal transmitter 200 is arranged to reduce the data rate by generating partial images/atlases/segment images in which redundant information has been removed. The partial images are subsequently combined and encoded to be included the image data signal.

The image source receiver 201 is coupled to a segmenter 203 which is arranged to generate/determine a set of object image segments in the plurality of images received by the image source receiver 201, i.e. in the source images. Each of the object image segments represents an object in the scene. The segmenter 203 is accordingly arranged to generate image segments where each image segment provides image data estimated to belong to the same scene object. The segmentation may in some cases result in multiple image segments being generated for the same scene object. However, the segmenter 203 is arranged to seek to generate each segment to include image data of (only) one scene object and will be processed under the assumption that the object image segment represents only a single scene object.

The segmentation may for example be based on a consideration of color, brightness, depth etc. for different pixels. For example, a segment may be generated to include a contiguous pixel region for which the color, brightness, and depth values all meet a similarity criterion.

It will be appreciated that many different algorithms, criteria, and approaches are known for image segmentation, and that the specific approach that is used will depend on the requirements and preferences of the individual implementation and application. It will also be appreciated that although the segmentation approach may seek to generate image segments that each represent a single scene object, most practical approaches are not 100% accurate, and that some image segments may possibly include pixels from multiple scene objects. However, whereas such inaccuracies may introduce some potential degradation, the described approach will tend to provide advantageous performance and has in practice been found to be fairly robust to imperfections in the segmentation operation.

The segmentation may specifically select contiguous image regions/areas/segments for which the pixels meet a criterion, and specifically a similarity criterion. The similarly criterion may include requirements that one or more properties such as a color, brightness, depth, transparency, etc. of the pixels of the segment meet a similarity criterion. In some embodiments, the segmenter may for example detect transitions e.g. in depth and/or brightness and/or color properties. These transitions may be used to determine edges between segments.

The segmentation may determine regions that accordingly have very similar properties and which accordingly can be assumed/ are highly likely to belong to the same scene object. Thus, the generated segments can be assumed to be object segments that each represent and typically is a capture of part of one object, i.e. a given image segment can be assumed to provide information/capture of one image segment.

Further, the segments can typically be assumed to represent/capture foreground (non-background) scene objects. Further, in some embodiments, the segmentation may be also be arranged to determine segments that specifically represent foreground/non-background objects by e.g. considering the depth values for the segments. For example, it may be required that image segments have depth properties that correspond to them not representing background objects (e.g. the depth values may meet a threshold requirement for not representing a background).

The set of object image segments may be a set of foreground object image segments.

The segmenter 203 is coupled to a selector 205 which is arranged to select a subset of the generated object image segments. Thus, the selector 205 applies a selection criterion/algorithm to select some of the object image segments and to correspondingly deselect some of the object image segments. The selector 205 is fed to a generator 207 which is arranged to generate an image data signal to comprise the subset of object image segments. In particular, the generator 207 may be arranged to add/combine the selected image regions into one or more images/frames, henceforth also referred to as segment images. Each such image/frame may comprise object image segments from different views and/or different input images. The selected object image segment may be packed into the given segment images using any suitable approach. In many embodiments, the individual image segments may be translated and/or rotated in order to allow a compact packing and in particular to allow each segment image to be packed as tightly as possible.

In some cases, the selection of the subset of object image segments may be dependent on the packing/inclusion in the segment image(s). For example, the apparatus may be arranged to include a given number, say one, segment images (e.g. for each frame time of a video signal) and the selector 205 may select object image segments under the constraint that the selected images can be packed into the given number of segment images. For example, the selector 205 may be arranged to prioritize the object image segments (typically based on occlusion measures as described later) and then select the highest rated object image segments until no more object image segments can be added in the given number of segment images.

The generator 207 may further generate metadata that describes how the segment image is formed by object image segments, and to include data indicating the original position/viewpoint of the individual object image segments. For example, for each object image segment, the metadata may include an indication of the original view image as well as a translation and rotation vector that allows it to be repositioned in the original view image.

The generator 207 may accordingly (e.g. for one or more frame times of a video signal) generate one or more segment images that include object image segments generated from the input view images and selected by the selector 205. Thus, a set of foreground segment images may be generated by segmenting and selecting foreground segment images.

Images including image regions/segments from a plurality of images are also in the field known as atlases and image regions of such atlases are often referred to as patches. Thus, the generator 207 may (e.g. for one or more (and in particular potentially all) frames of a video signal) proceed to generate one or more (foreground object) atlases comprising (foreground object) patches where the patches are selected by the selector 205. The segment image(s) may also be referred to as pruned images in line with usage in the field.

It will be appreciated that in some video applications, the generator 207 may be arranged to include object image segments from different frames in the same segment image.

The generator 207 is coupled to an encoder 209 which receives the segment images and proceeds to perform the encoding of the images. The encoder 209 can equivalently be considered to be part of the generator 207 but is for clarity illustrated and described as a second block. It will also be appreciated that the encoder 209 is optional and that in principle unencoded and uncompressed image data for the segment image could be transmitted/distributed to e.g. rendering clients.

As will be described in more detail later, the generator 207 may additionally generate and include a background image for the scene and the representation of the scene may be provided by the combination of (typically) one background image and one or more atlases comprising foreground object image segments/patches.

The encoder 209 may encode the images/atlases using any suitable encoding algorithm or approach. A particular advantage of the approach is that the representation of the scene by segment image(s) is achieved in a way that allow conventional image and video encoding approaches to be performed by the encoder 209. For example, in many embodiments encoding formats such as High Efficiency Video Coding (HEVC), also known as H.265 and MPEG-H Part 2, or Versatile Video Coding (VVC) developed by the Joint Video Exploration Team (JVET) may be used. In many cases, the packing of the object image segments into segment images may typically be performed such that the resulting images are highly suitable for encoding.

The image data signal transmitter 200 of FIG. 2 may accordingly provide an efficient approach for generating an efficient image data signal representing a scene from a range of view poses. The approach may in particular generate an image data signal that may reduce the data rate substantially while still allowing high image quality processing and rendering from the image data signal. The approach may reduce the amount of image data that is included by selection of only parts of the input mages to represent the foreground objects and thus rather than encoding and including all input images, only the segment images/atlases and potentially a background image needs to be included in the image data signal.

The image data signal is transmitted to an image data signal receiver 300 which comprises a receiver/decoder 301 that is arranged to receive the image data signal and to decode this to generate the set of segment images and the background image that were fed to the encoder 207. Thus, the receiver/decoder 301 may be arranged to perform a decoding according to the standard that was used by the encoder 207, such as for example by performing a HEVC or VVC decoding.

It will be appreciated that the image data signal transmitter 200 and the image data signal receiver 300 further comprises required functionality for communicating the image data signal including functionality for encoding, modulating, transmitting, receiving etc. the image data signal. It will be appreciated that such functionality will depend on the preferences and requirements of the individual embodiment and that such techniques will be known to the person skilled in the art and therefore for clarity and brevity will not be discussed further herein.

The receiver/decoder 301 is coupled to a renderer 303 which is arranged to generate images representing a view of the scene from a given view pose. The renderer may be arranged to dynamically generate images that represent changes in the view pose. Further, the received image data signal may be a video signal with consecutive frames and the renderer 203 may be arranged to generate new images for each frame time to provide a video experience.

The renderer 303 may thus generate images representing a view port of the scene from a given viewpoint/pose. In many cases, the view pose may be dynamically changed in response to e.g. a manual user input (e.g. from a joystick or other input mechanism) or by head tracking of a user.

The renderer 303 which is arranged to generate new view images based on the segment image (and any full/background images) received. It will be appreciated that any suitable algorithm for rendering a view image corresponding to a given viewer pose may be used. For example, the renderer 303 may be arranged to first generate a view image based on a received background image, e.g. using view shifting/synthesis algorithms. It may then proceed to process the segment images/atlases to generate image areas representing foreground objects from the given view pose and these may then be overlaid on the generated background image (specifically pixels of the generated foreground image areas may replace the corresponding pixels of the background image). It will be appreciated that the skilled person will be aware of many different algorithms and approaches for synthesizing views for specific purposes based on images from other viewpoints and from patches and atlases and that any suitable algorithm may be implemented by the first renderer. Examples of rendering of images based on atlases and patches may for example be found in e.g. J. Boyce et al., MPEG Immersive Video Coding Standard, PROCEEDINGS OF THE IEEE, Vol. 109, No. 9, September 2021.

A particularly critical issue of an approach based on reduced image information, such as the described approach of FIGs. 2 and 3 using atlases and patches, is that of how to select which image data to include and which image data to exclude from the image data signal, and in particular which object image segments to include in the segment image(s) and which object image segments to exclude from the segment image(s).

In the following, an approach will be described where the selection of object image segments is based on a consideration of occlusion properties, and specifically on occlusion properties for objects represented by the object image segments.

The image data signal transmitter 200 of FIG. 2 specifically comprises an occlusion determiner/determination circuit 211 which is arranged to determine an occlusion measure/property for one, more, and typically all of the object image segments generated by the segmenter 203.

The occlusion measure for a given object image segment may be determined to reflect the occlusion of the object represented by the object image segment and/or may be determined to reflect occlusion of one or more other objects by the object represented by the object image segment. In most embodiments, the occlusion measure may be determined to be indicative of how much of the full view (from the given viewpoint of the object image segment) of the object represented by the object image segment is represented by the object image segment. For example, in some embodiments, the occlusion measure may indicate the percentage of the object viewable from the viewpoint of the given object image segment is included in/represented by the object image segment.

The occlusion/de-occlusion may also (as appropriate) be referred to as object covering/de-covering or degree of visibility of the object (from the given viewpoint).

The occlusion measure for a given object image segment is determined to be indicative of a degree of occlusion/covering/visibility of the object represented by the object image segment (typically from the viewpoint of the object image segment).

The specific approach used to determine the occlusion measure for a given object image segment may depend on the preferences and requirements of the individual embodiment.

For example, in situations where the input view images are determined by evaluation of a 3D model of a (possibly fully virtual/artificial) scene, the occlusion determiner 211 may receive the underlying 3D model and perform a geometric analysis to determine the proportion of a given object that is captured/represented by the object image segment.

In the case where only input images (typically with depth maps) are received that represent the scene from a set of viewpoints/poses and no other dedicated model or scene data is provided, the occlusion determiner 211 may proceed to determine the occlusion measure for a given object image segment by using reprojection of pixels in one view of the multi-view image set to all other views. The reprojection uses the depth-maps and the camera-data. For each reprojected pixel, a depth-test is carried out that compares the reprojected depth-value with the actual depth value of the original target view. When the reprojected depth values is larger than the actual depth value of the original target view, the pixel is considered to be occluded in the target view. The amount of occluded pixels is counted per object and per (target) view. This process is repeated for the other views. The occlusion pixel count yields an indication of the amount of occlusion per object per view.

In some cases, the occlusion measure for a given object image segment may be determined in dependence on an object detection reliability measure for an object represented by the first object image segment. For example, the well known algorithm known as the `Fast R-CNN' object detector gives a reliability score along with the region of the detected object (see e.g. R. Girshick, "Fast R-CNN," 2015 IEEE International Conference on Computer Vision (ICCV), Santiago, Chile, 2015, pp. 1440-1448, doi: 10.1109/ICCV.2015.169). When an object is partly occluded, the reliability score gets lower. Especially when the detection is collocated with another (detected) object, the reliability score can indicate the amount of occlusion.

In some cases, the occlusion measure for a given object image segment may be determined in dependence on size property for the object image segment. This size property can be measured in 3D space using the depth and camera data. This prevents changes in relative size due to variation in camera positions. For example, when the 3D size of the object is computed over all views, the distribution of this size metric yields an indication for the amount of occlusion. Especially when this metric is combined with direct object adjacency information. Then views that mostly stand alone, i.e. are not visually connected to other objects, may provide a 3D size metric that serve as a reference.

In some cases, the occlusion measure for a given object image segment may be determined in dependence on shape property for the object image segment. For example, when the object segment in the image consists of multiple connected images regions, it indicates that the object is visually split, and may be occluded. Especially when it is collocated with another (closer) object.

In some cases, the occlusion measure for a given object image segment may be determined in dependence on proximity of an object represented by the object image segment to another object of the scene. For example, when two objects are visually connected, the object that is further away is likely to be occluded. This property is especially useful in combination with other earlier described occlusion measures.

In some cases, the occlusion measure for a given object image segment may be determined in dependence on a similarity measure between the object image segment and another object image segment (of the other view images or of another temporal frame). For example, if an object is uncovered in a current frame but due to its motion likely to be covered by another object in a future frame it can already be flagged as `will become occluded soon' and as a result can be excluded from the atlas.

The occlusion measures determined for the object image segments by the occlusion determiner 211 are fed to the selector 205 which is arranged to select object image segments for the subset of object image segments that are included in the segment image in dependence on the occlusion measures.

As will be described in more detail later a number of different algorithms and selection criteria may be used for selecting the object image segments for inclusion in the segment image and the selected approach applied will depend on the specific preferences and requirements of the specific embodiment and application. As a low complexity example, the selector 205 may for example be arranged to select a fixed number of object image segments for each object with the selection being such that the N object image segment of a given object with occlusion measures indicative of the lowest occlusion are selected. As another example, object image segment may for a given segment be selected until an object coverage of the object image segment as indicated by the occlusion measures exceed a given threshold.

In some embodiments, an image/video encoder apparatus may be provided that prunes patches of input images based on the amount of object occlusion (lack of object visibility) such that for example each scene object is represented, and preferably only from views in which the object is not occluded. The pruning may be directed to minimize the amount of occlusion in the resulting image data, while e.g. preserving enough views to enable accurate rendering of viewports within a relevant viewing space.

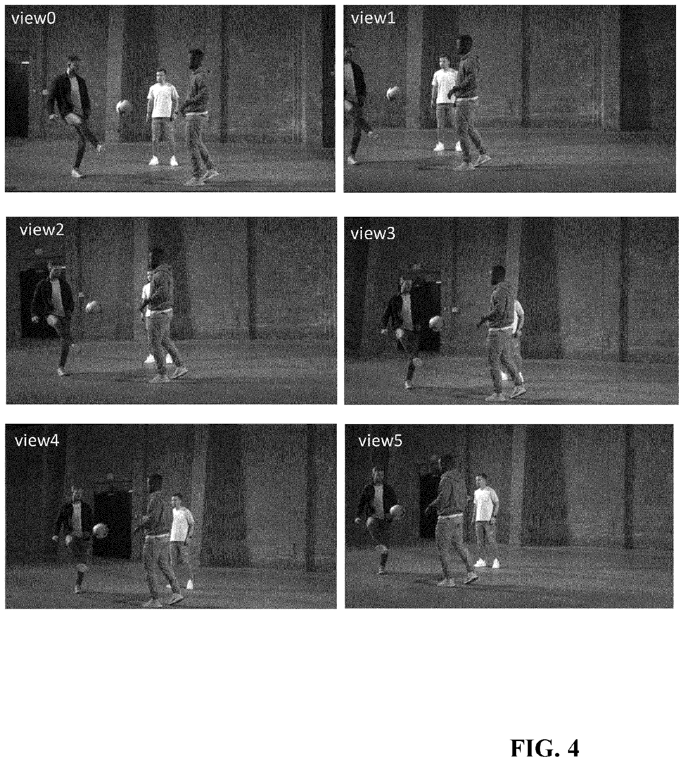

Some exemplary illustrations and approaches may be described with reference to FIG. 4 which shows six different views of the same 3D scene (at the same time). The six views may for example be views of a multi-view video frame. In the example, some objects(subjects) are fully visible from one or more of the views while some are partly occluded (from at least some views).

In the specific example, the segmentation of the person with the light shirt will typically contain errors for views 1, 2, 3 and 4 where this person is partially occluded. Moreover, for these views, the patch/image segment shape will also rapidly change over time, even for a perfect patch segmentation, due to the occlusion by another object. For the person with the light shirt, the selector 205 may select only the corresponding patches of views 0 and 5 to the atlas because they provide a non-occluded view of the subject (the light shirt) while covering a wide range of viewing angles.

The person with the dark shirt is partially occluded in view 1 and visible in all other views. Patches of all or a subset of the views 0, 2...5 may be selected to represent this person, for instance views 0, 2 and 5. The motivation for choosing only a subset is that it reduces pixel and bit rate.

The third person is fully visible in all views and corresponding patches/image segments for all or a subset of views may be selected to present this person, for instance views 1, 3 and 5. Again, the motivation for choosing only a subset is that it reduces pixel and bit rate.

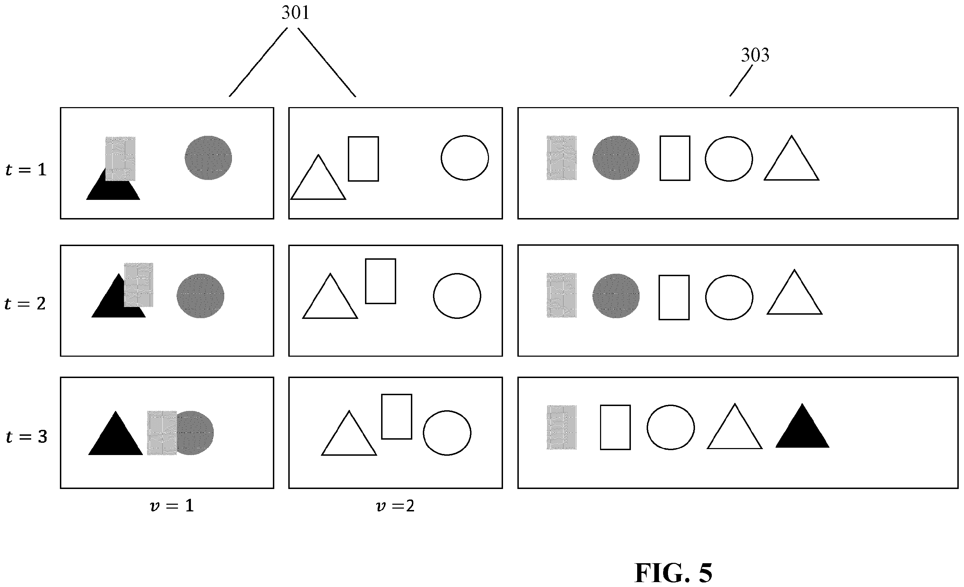

Another example is provided in FIG. 5 which illustrates how patches/object image segments from two example source views 301 can be placed in an atlas 303 using partial occlusion as a placement criterion. The example illustrates three consecutive frames t=1,2,3 of a video signal. In the example, the non-occluded views of each object in view v=1 are packed in the atlas, which is possible because view v=2 has a non-occluded view on all objects. The packing for frame t=1 and t=2 is kept the same, and at t=3 the packing is changed due to the movement of the rectangular object. FIG. 5 illustrates an example of an occlusion-aware packing in which only non-occluded views of each object in view v=1 are packed in the atlas, because view v=2 has a non-occluded view on all objects. The packing for frame t=1 and t=2 is kept the same, and at t=3 the packing is updated because of a change in occlusion of the triangle and circle in view v=1.

As previously mentioned, the image data signal transmitter 200 is typically arranged to generate a background image in addition to the segment image(s) and the image data signal is generated to include this background image.

The image data signal transmitter 200 may specifically comprise a background extractor 213 which is arranged to extract a background image. The background extractor 213 may for example be arranged to generate the background image by determining background pixels in the input images (e.g. based on depth) and then perform view synthesis generating an image from a given viewpoint from the background pixels and ignoring non-background pixels. Such an approach may include viewpoint shifting of the background pixels from the different images. The view shifted pixels may then be combined (e.g. using selection combining or merging) to generate the image. In case of holes and missing data, extrapolation, such as infilling, may be used to populate the regions. As another example, the background extractor 213 may additionally or alternatively be arranged to remove the object image segment from the input images and generate the background image from the remaining pixels. It will be appreciated that many different algorithms and approaches of generating an image from multiple images of a scene from different viewpoints are known and that any suitable approach may be used.

The image data signal transmitter 200 may accordingly proceed to synthesize one or more background views and exclude them from further processing to generate the foreground atlases. The background typically consists of one or more large objects that are occluded in different places for each of the views. View synthesis (with inpainting) may often result in a fully visible virtual view, thus providing a higher quality at a lower pixel and bit rate.

One method to extract patches from source view videos/images is by segmenting the pixels in a view based on depth, colour and/or object instance segmentation. An (often static) background and (often dynamic) foreground patches may be generated and treated differently. A single background patch/image (e.g. a synthetic view with depth) can be created based on all input views and included as a separate image or included in the atlas/segment image. This may already provide a drastic pixel reduction. Foreground regions/object image segments from the input images/source views can also be placed in a/the atlas with these being pruned based on occlusion measures to further provide a substantial pixel/data rate reduction.

The approach of combining a background image and foreground patches as described may be highly advantageous in many scenarios. Considerations for e.g. having only a single representation for the background and many representations for foreground objects include the following:
An (estimated) depth for the background regions is typically of good quality since they often consist of flat areas, such as floors and walls, that may be modelled as Lambertian objects which have essentially the same appearance/reflectance/luminance when viewed from different angles.

Furthermore, the background regions are further away which reduces the angle over which the viewpoint changes during rendering. This results in fewer depth error induced distortions and errors due to angular illumination changes. Therefore, the background is typically not dependent on the viewing angle and the viewpoint/pose. In contrast, foreground objects typically have a more complex 3D shape and are subjected to larger depth induced errors when shifting their viewpoints. Moreover, illumination changes over angle start to play a role. Therefore, the foreground objects tend to look very different from different viewpoints/poses. The described approach allows a low complexity generation of background view images by a renderer (including in many embodiments simply using the received background image regardless of the current viewpoint) with the main rendering complexity being focused on processing the foreground object image segments to generate image segments that represent the views of the foreground objects from the current viewpoint. These image segments may then be overlaid upon the background image to generate a view image of the scene. The approach may provide lower complexity/resource rendering with good image quality based on a relatively low data rate of the image signal. The approach may provide improved trade-off between rendering complexity/resource, data rate of the image signal, and the (perceived) quality of the rendered images.

The exact selection criteria used for determining which object image segment to include will depend on the requirements and preferences of the individual embodiment. However, in most embodiments, the selector 205 is arranged to bias selection of object image segments toward object image segments for which the occlusion measure is indicative of reduced occlusion.

As previously described, the selector 205 may be arranged to evaluate the occlusion measure for a number of object image segments that represent the same object. It may then proceed to select object image segments in the ranking order (from reduced occlusion towards increased occlusion) until a given stop criterion is met (e.g. that a given number of object image segments are selected, that a certain coverage is reached, or that a certain combined size of the selected segments is reached etc.).

In some embodiments, the selector 205 is arranged to select an object image segment for the subset if the occlusion measure meets a criterion, and to exclude it if it does not meet the criterion, where the criterion is met when the occlusion measure indicates that the degree of occlusion of the object of the object image segment is below a threshold. The threshold may be a fixed and predetermined threshold or may be a variable threshold that is determined based on other parameters. For example, in some embodiments, the threshold may be dependent on other object image segments that have been selected for the objects, on the number and size of object image segment already selected, on occlusion measures for other object image segments, on a depth of the object, on a size of the object, on the significance of the object etc.

In some embodiments, the threshold may be a threshold corresponding to the lowest occlusion of any other object image segment for the same object. For example, the selector 205 may sequentially consider each object image segment for a given object. The threshold may be set to the lowest occlusion of any previously considered object image segment. If the criterion is met for anew object image segment, the selector 205 may then discard the previously least occluded object image segment and instead select the current object image segment for inclusion in the image data signal. The selector 205 may then adapt the threshold to reflect the occlusion of the current object image segment. This threshold may then be used for subsequent object image segments.

In most embodiments, the selector 205 is arranged to select an object image segment having an occlusion measure indicating no occlusion over an object image segment having an occlusion measure indicating (part) occlusion.

In some embodiments, the occlusion measure may be a binary indication which simply indicates whether the object image segment is for an occluded object or not. In such a case, the selector 205 may be arranged to bias the selection towards the non-occluded segment and indeed in many embodiments, the selector 205 may be arranged to always select a non-occluded object image segment over an occluded object image segment. In examples where the occlusion measure is not a binary value (but e.g. a percentage of the visible surface of the object being occluded), the selector 205 may be arranged to select object image segments with zero occlusion values if such are available while in such a case discarding object image segments indicating some degree of occlusion.

In some embodiments, the selector 205 is arranged to select a plurality of object image segments for at least one object with the selection being dependent on view poses for the images of the object image segments.

For example, if more than one object image segment is selected for a given object, then these may be selected to be from different viewpoints in order to provide an improved coverage of the object as seen from different directions. For example, as previously described, if segmenter generates object image segments for a given object from a plurality or all of the input multi-view images, the selector 205 may proceed to select a subset of these with the selection of the subset taking into account the viewpoints of the images. For example, as previously described, the subset may be selected to provide object image segments that represent the object from different directions. For example, if three object image segments are considered a maximum of segments to include for a given object, the object image segments of the two most extreme viewpoints as well as the most central viewpoint comprising object image segments for the object may be selected. For example, for a 9 view input multi-view image, the segments from views 1, 5, and 9 may be selected if available (and if not the closest views to these may be selected).

In some embodiments, the selector 205 is arranged to select at least one object image segment for each identified object of the scene. The selector 205 may be arranged to select the object image segment subject to the constraint/condition that at least one object image segment is included in the segment image (e.g. subject to an object image segment being available and that there is space to include the segment image).

The selector 205 may thus be arranged to bias the selection towards including at least one object image segment for each foreground object. This may allow improved rendering and may reduce the risk of a foreground object not being appropriately represented by the image data signal, and thus may reduce the risk of the rendering of the scene missing any objects.

In some embodiments, the selector 205 is arranged to exclude at least one object image segment for an object for which there are a plurality of object image segments which have occlusion measures indicative of a partial occlusion.

The selector 205 may remove/discard at least one partially occluded segment for an object that have multiple occluded segments. In many embodiments, the object image segment may be removed in order of the occlusion such that more occluded object image segments are discarded before less occluded object image segments. This may in many scenarios allow a substantially reduced data rate while still allowing a high quality rendering of the scene based on the image data signal.

The approaches may allow the views of an object that are partially occluded to be pruned before adding to the atlas. This may achieve a pixel rate reduction and may avoid rendering problems.

In many approaches, the approach may be arranged to preserve at least one view of an object for which all views are (partially) occluded. This may typically avoid rendering problems due to an object that is entirely missing.

In some embodiments, the selector 205 and/or the image generator 207 may be arranged to resample/rescale the object image segments. For example, if it is not possible to fit all object image segment/foreground patches in the atlas, the image data signal transmitter 200 may down-scale/resample the object image segments/patches.

An example of an overall strategy that may be used on some embodiments is the following:
Sort all object image segments/patches from all views in order of decreasing visibility/increasing occlusion. The patches may then be grouped in sets of view corresponding patches. The patches may then be packed into the atlas in order of decreasing visibility/increasing occlusion, while making sure that from each set of view corresponding patches at least one patch from one view, or alternatively, a subset of at least N patches form each patch set, with enough viewpoint variation, is placed in the atlas.

The image data signal transmitter 200 may accordingly generate an image data signal that comprises image data describing a scene where the data includes a set of object image segments/patches with each object image segment/patch providing image data for a scene object of the scene from a given view pose. The object image segment/patches may provide image data from different view poses. In particular, the image data may include one or more atlases with patches representing foreground (non-background) objects.

In addition, in many embodiments, the generator 207 may further be arranged to include an indication of the occlusion measure for at least one of the object image segments in the image data signal, and typically for all object image segment.

The image data signal may be generated to include a data value for each (or at least one or some) object image segments which indicates how much the corresponding object is considered to be occluded. In most embodiments, the indication is specific for the object image segment and indicates how much coverage of the object (typically from the viewpoint of the object image segment) is provided by the object image segment. As an example, for a given object image segment, the indication may provide a proportion of the total view of the object from the viewpoint of the object image segment that is indeed represented by the object image segment (and/or equivalently how much of the object is occluded).

In some embodiments, the occlusion measure indication may indicate the combined occlusion provided by multiple object image segments. For example, the occlusion measure indication for a plurality of object image segments for the same object may indicate the total coverage provided by these object image segments (and in such a case, the image data signal may include only one indication for the plurality of object image segments).

The renderer 303 may adapt the rendering of the scene based on the received indications of the occlusion measures of the object image segment. For example, the renderer can synthesize a target view for all received object image segments. It may then subsequently blend these synthesized fragments into a single output image. The weights for this blending process, that control to what extent the individual fragments contribute to the output, depend on the received occlusion measure indication, where a lower occlusion measure (higher visibility) results in a higher blending weight. The dependency is typically nonlinear and may be computed jointly for a set of received object image segments that belong to the same object.

In some embodiments, the generator 20 may be arranged to include an object identity for (one, more or all) object image segments in the image data signal where the object identity for a given object image segment indicates the object represented by the object image segment. As part of the segmentation to generate different object image segments, the segmenter 203 may also determine whether different object image segments belong to the same object. Such a determination may e.g. be determined from a depth, color and/or object instance segmentation and comparison. Furthermore, tracking across different views and/or frames may be applied to ensure a consistency of the allocation of object image segments to the different objects.

Such object identities may then be used in the decoding process. In particular, when rendering a given image segment, the whole corresponding object may be rendered based on all object image segment indicated to represent that object. Thus, specifically, the renderer 303 may select all patches/object image segments that have the same object identity and it may use these as different view image data for a view synthesis from the desired rendering viewpoint.

The image data signal receiver 300 may specifically be arranged to receive the image data signal that include object image segments/patches with object ID's and it may perform view selection such that for each object at least one view is selected when rendering the scene. View selection may improve rendering efficiency. Rendering at least one object may avoid/reduce rendering problems due to missing objects. In some embodiments, the image data signal receiver 300 may also receive occlusion information in the form of e.g. a simple partial occlusion flag which indicates whether the corresponding patch represents a partially occluded object (from that viewpoint). It may then prioritize views/object image segment for which such a flag is false.

The approach may as previously described be applied to an individual multi-view image of a scene with no temporal component. However, in many embodiments, the approach may be applied to a (multi-view) video signal and the described approach may specifically be applied to one or more frames of the video signal.

A video signal may comprise a sequence of temporal frames with each temporal frame providing a capture of the scene for a given time instant. The duration between consecutive temporal frames is typically short such that the consecutive rendering of frames provides a perception of a smooth moving image. For example, video signals with 60 or more frames per second have become widely used. Each temporal frame may be a multi-view frame comprising captured images of the scene from different viewpoints.

In some embodiments, the described approach may be applied to each multi-view temporal frame, and indeed may be applied to each multi-view temporal frame independently of any other frames. In some embodiments, the approach may only be applied to some frames.

In many embodiments, the image data signal transmitter 200 may be arranged to take multiple temporal frames into account and/or process multiple frames together. For example, in some embodiments the selector 205 may be arranged to maintain the same selection over a plurality (and typically consecutive) temporal frames. For example, the described processing and selection may be performed for a given temporal frame and the same selection of object image segments may be used for e.g. the N frames before and/or after the current frame. In other embodiments, the selector may be arranged to more flexibly consider selections of (temporally) neighboring frames when making selections for the current frame. For example, the consistency in selection across consecutive temporal frames may be prioritized when performing selections for the individual frame.

Such approaches of maintaining selection consistency between frames (while allowing the object image segment of the individual frames to be different and reflect the captured image data for the individual temporal frame) may be advantageous in many scenarios. It may for example improve video coding performance because of the temporal correlation and redundancy between atlases for consecutive frames being increased which can be exploited by the video encoding.

As a specific example of the described approach, the image data signal transmitter 200 may for a given image, or often for one, more, and typically all frames of a multi-view video sequence perform the following operations:
1. For all views, proceed to estimate the corresponding depth-maps using a depth estimator or alternatively use depth-cameras to obtain depth.
2. For all views, detect and segment foreground objects. A per-pixel object-id (label) from an object segmentation may be used to identify the foreground and background. Pixels that are part of the background may be unlabeled (or may be labeled by a dedicated label, such as e.g. a value of zero).
3. For all detected objects in all views, the visibility/obstruction/occlusion is then determined. For this purpose, one or more of the following metrics may for example be used:
   a) The object detection score/confidence. This score relates to the partial object visibility.
   b) Size and shape of the segmentation. The shape may change over time, or an object may become fragmented.
   c) Object proximity. Objects that are visually in contact, are more likely to occlude each other.
   d) Exact visibility testing by visual matching with previous and/or neighboring frames/views.
   The properties of a. and b. may often be relative over time and relative over neighboring views.
4. For all identified background regions in all views, a single representation at a fixed position, in the atlas is created by reprojecting and blending (combining) them to a central view. Alternatively a dedicated, separate background image may be generated.
5. For all identified foreground objects in all views, the corresponding objects in previous frames and in neighboring views are determined and tracked. For example, by visual matching.
6. For all objects, the visibility metrics are compared in neighboring views, over an interval of for example, 8 frames. Over time corresponding objects, with sufficient visibility, are packed to consistent locations in the atlas. Objects with insufficient visibility are discarded.
7. The atlases are encoded with a regular video coder, such as a HEVC (High-Efficiency Video Coding) encoder and the camera and packing configuration is embedded as metadata using MIV (MPEG Immersive Video).

A corresponding image data signal receiver 300 may comprise a decoder and renderer which renders at least one view of each object, and preferably only non-occluded views. Patch metadata in the bitstream may include:
- Object ID's
- Partial occlusion information

When the image data signal receiver 300 has enough resources, it may render all available patches, but it may be advantageous to render only one or two views of each object because this may reduce image blur, thus improving rendering quality, and it is also more efficient, which may for instance improve battery life or reduce CO₂ emissions.

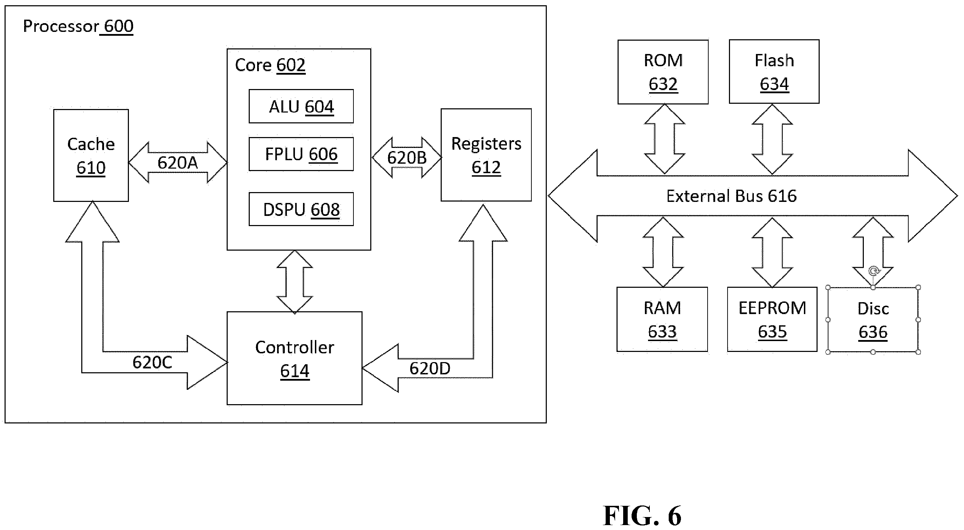

FIG. 6 is a block diagram illustrating an example processor 600 according to embodiments of the disclosure. Processor 600 may be used to implement one or more processors implementing an apparatus as previously described or elements thereof. The processor 600 may be suitable for the functionality of the image data signal transmitter 200 and/or the image data signal receiver 300. Processor 600 may be any suitable processor type including, but not limited to, a microprocessor, a microcontroller, a Digital Signal Processor (DSP), a Field Programmable Gate Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 600 may include one or more cores 602. The core 602 may include one or more Arithmetic Logic Units (ALU) 604. In some embodiments, the core 602 may include a Floating Point Logic Unit (FPLU) 606 and/or a Digital Signal Processing Unit (DSPU) 608 in addition to or instead of the ALU 604.

The processor 600 may include one or more registers 312 communicatively coupled to the core 602. The registers 612 may be implemented using dedicated logic gate circuits (e.g., flip-flops) and/or any memory technology. In some embodiments the registers 612 may be implemented using static memory. The register may provide data, instructions and addresses to the core 602.

In some embodiments, processor 600 may include one or more levels of cache memory 610 communicatively coupled to the core 602. The cache memory 610 may provide computer-readable instructions to the core 602 for execution. The cache memory 610 may provide data for processing by the core 602. In some embodiments, the computer-readable instructions may have been provided to the cache memory 610 by a local memory, for example, local memory attached to the external bus 616. The cache memory 610 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 600 may include a controller 614, which may control input to the processor 600 from other processors and/or components included in a system and/or outputs from the processor 600 to other processors and/or components included in the system. Controller 614 may control the data paths in the ALU 604, FPLU 606 and/or DSPU 608. Controller 614 may be implemented as one or more state machines, data paths and/or dedicated control logic. The gates of controller 614 may be implemented as standalone gates, FPGA, ASIC or any other suitable technology.

The registers 612 and the cache 610 may communicate with controller 614 and core 602 via internal connections 620A, 620B, 620C and 620D. Internal connections may be implemented as a bus, multiplexer, crossbar switch, and/or any other suitable connection technology.

Inputs and outputs for the processor 600 may be provided via a bus 616, which may include one or more conductive lines. The bus 616 may be communicatively coupled to one or more components of processor 600, for example the controller 614, cache 610, and/or register 612. The bus 616 may be coupled to one or more components of the system.

The bus 616 may be coupled to one or more external memories. The external memories may include Read Only Memory (ROM) 632. ROM 632 may be a masked ROM, Electronically Programmable Read Only Memory (EPROM) or any other suitable technology. The external memory may include Random Access Memory (RAM) 633. RAM 633 may be a static RAM, battery backed up static RAM, Dynamic RAM (DRAM) or any other suitable technology. The external memory may include Electrically Erasable Programmable Read Only Memory (EEPROM) 635. The external memory may include Flash memory 634. The External memory may include a magnetic storage device such as disc 636. In some embodiments, the external memories may be included in a system.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An apparatus for generating an image data signal for a scene, the apparatus comprising:
a receiver (201) arranged to receive a plurality of images of the scene, at least some images of the plurality of images being for different view poses of the scene;
a segmenter (203) arranged to determine a set of object image segments in the plurality of images, each object image segment of the set of object image segments representing an object of the scene;
a selector (205) arranged to select a subset of object image segments from the set of object image segments;
a generator (207) arranged to generate the image data signal to comprise the subset of object image segments;
wherein the apparatus further comprises:
an occlusion determiner (211) arranged to determine an occlusion measure for object image segments of the set of object image segments, the occlusion measure for an object image segment indicating a degree of occlusion of an object represented by the object image segment; and
wherein the selector (205) is arranged to select object image segments for the subset dependent on the occlusion measures for the set of object image segments.

2. The apparatus of claim 1 wherein the selector (205) is arranged to bias selection of object image segments towards object image segments for which the occlusion measure is indicative of reduced occlusion.

3. The apparatus of claim 1 or 2 wherein the selector (205) is arranged to select an object image segment for the subset if the occlusion measure meets a criterion, and to exclude the object image segment if it does not meet the criterion, the criterion being met for an occlusion measure being indicative of a degree of occlusion being less than a threshold.

4. The apparatus of any previous claim wherein the selector (205) is arranged to select an object image segment having an occlusion measure indicating no occlusion over an object image segment having an occlusion measure indicating occlusion.

5. The apparatus of any previous claim wherein the selector (205) is arranged to select a plurality of object image segments for at least one object with the selection being dependent on view poses for the images of the object image segments.

6. The apparatus of any previous claim wherein the selector is arranged to select at least one object image segment for each identified object of the scene.

7. The apparatus of any previous claim wherein the selector (205) is arranged to exclude at least one object image segment of the set of object image segments from the subset of object image segments for an object for which the set of object image segments comprise a plurality of object image segments having occlusion measures indicative of a partial occlusion.

8. The apparatus of any previous claim wherein the generator (207) is arranged to include a plurality of object image segments of the subset of object image segments in an image atlas, and to encode the image atlas using an image encoding operation.

9. The apparatus of any previous claim wherein the image data signal is a video signal comprising image data for a plurality of temporal frames and the plurality of images are for a same temporal frame of the temporal frames.

10. The apparatus of claim 9 wherein the selector (205) is arranged to maintain the same selection over a plurality of the temporal frames.

11. The apparatus of any previous claim wherein the occlusion determiner (211) is arranged to determine an occlusion measure for a first object image segments in dependence on at least one of:
an object detection reliability measure for an object represented by the first object image segment;
a size property for the first object image segment;
a shape property for the first object image segment;
a proximity of an object represented by the first object image segment to another object of the scene; and
a similarity measure between the first object image segment and another object image segment.

12. The apparatus of any previous claim wherein the generator (207) is further arranged to generate a background image for the scene and to include the background image in the image data signal.

13. The apparatus of any previous claim wherein the generator (207) is arranged to include an indication of the occlusion measure for at least one object image segment in the image data signal.

14. The apparatus of any previous claim wherein the generator (207) is arranged to include an object identity for at least some object image segments in the image data signal, an object identity for a first object image segment being indicative of an object represented by the first object image segment.

15. A method of generating an image data signal for a scene, the method comprising:
receiving a plurality of images of the scene, at least some images of the plurality of images being for different view poses of the scene;
determining a set of object image segments in the plurality of images, each object image segment of the set of object image segments representing an object of the scene;
selecting a subset of object image segments from the set of object image segments;
generating the image data signal to comprise the subset of object image segments;
wherein the method further comprises
determining an occlusion measure for object image segments of the set of object image segments, the occlusion measure for an object image segment indicating a degree of occlusion of an object represented by the object image segment; and
wherein the selecting includes selecting object image segments for the subset dependent on the occlusion measures for the set of object image segments.

16. An apparatus for generating an image, the apparatus comprising:
a receiver (301) arranged to receive an image data signal comprising image data describing a scene, the image data comprising:
a set of object image segments, each object image segment providing image data for of a scene object of the scene from a view pose, at least some object image segments providing image data from different view poses; and the image data signal further comprising:
at least one occlusion measure for at least one object image segment of the set of object image segments, the occlusion measure being indicative of a degree of occlusion of an object represented by the at least one object image segment; and
a renderer (303) arranged to generate an image representing a view of the scene from a view pose from the received object image segments, the generation of the image being dependent on the at least one occlusion measure.

17. A method of generating an image, the method comprising:
receiving an image data signal comprising image data describing a scene, the image data comprising:
a set of object image segments, each object image segment providing image data for of a scene object of the scene from a view pose, at least some object image segments providing image data from /for different view poses; and the image data signal further comprising:
at least one occlusion measure for at least one object image segment of the set of object image segments, the occlusion measure being indicative of a degree of occlusion of an object represented by the at least one object image segment; and
generating an image representing a view of the scene from a view pose from the received object image segments, the generation of the image being dependent on the at least one occlusion measure.

18. An image data signal comprising image data describing a scene, the image data comprising:
a set of object image segments, each object image segment of the sets of object image segments providing image data for a scene object of the scene from a view pose, at least some object image segments providing image data from different view poses; and the image data signal further comprising:
at least one occlusion measure for at least one object image segment of the set of object image segments, the occlusion measure being indicative of a degree of occlusion of an object represented by the at least one object image segment.

19. A computer program product comprising computer program code means adapted to perform all the steps of any of the claims 15 or 17 when said program is run on a computer.
